**Europäisches Patentamt**

**European Patent Office**

**Office européen des brevets**

(19)

(11) Veröffentlichungsnummer : **0 005 553**
**B1**

(12) # EUROPÄISCHE PATENTSCHRIFT

(45) Veröffentlichungstag der Patentschrift : 30.09.81

(51) Int. Cl.³ : **C 02 F 3/08, C 02 F 3/18**

(21) Anmeldenummer : **79101536.5**

(22) Anmeldetag : **21.05.79**

(54) Vorrichtung zur Umsetzung von in Abwässern und Abwasserschlämmen enthaltenen Stoffen.

(30) Priorität : 22.05.78 DE 2822347

(43) Veröffentlichungstag der Anmeldung :
28.11.79 (Patentblatt 79/24)

(45) Bekanntmachung des Hinweises auf die Patenterteilung : 30.09.81 Patentblatt 81/39

(84) Benannte Vertragsstaaten :
**AT BE CH DE FR GB LU NL SE**

(56) Entgegenhaltungen :
DE - A - 2 544 177
DE - A - 2 615.465
DE - A - 2 638 665
DE - B - 1 184 286
DE - B - 1 815 001
DE - C - 159 044
FR - A - 1 320 157
US - A - 3 837 492

(73) Patentinhaber : **Stähler, Theo**
**Mühlenhof**
**D-6253 Hadamar-Niederzeuzheim (DE)**

(72) Erfinder : **Stähler, Theo**
**Mühlenhof**
**D-6253 Hadamar-Niederzeuzheim (DE)**

(74) Vertreter : **Röbe-Oltmanns, Georg, Dr.**
**Dotzheimer Strasse 61**
**D-6200 Wiesbaden (DE)**

Imprimerie Jouve, 17, rue du Louvre, 75001 Paris, France

## Vorrichtung zur Umsetzung von in Abwässern und Abwasserschlämmen enthaltenen Stoffen

Die Erfindung betrifft eine Vorrichtung zur Umsetzung von in Abwässern und Abwasserschlämmen enthaltenen Fremdstoffen, insbesondere Schadstoffen, vor allem Fäkalien, in unschädliche Stoffe mit mehreren in einem Umsetzungsbecken bzw. Schlammbelüftungsbecken angeordneten, umlaufenden, auf der einen Seite des Umsetzungsbeckens bzw. des Schlammbelüftungsbeckens ganz aus dem Wasser bzw. Schlamm auftauchenden und auf der anderen Seite ganz eintauchenden Hohlkörpern, deren auf der Auftauchseite oben liegendes Teil auf der Eintauchseite unten liegt und umgekehrt.

Vorrichtung mit Hohlkörpern der genannten Art, die in ihrer Wandung eine Vielzahl von Durchbrechungen aufweisen, wobei die Durchbrechungen nur in dem Teil der Wandung angeordnet sind, der auf der Auftauchseite oben liegt, werden in der Praxis benutzt. Bei diesen Vorrichtungen besteht die Gefahr, daß der beim Weg der Hohlkörper unterhalb der Wasseroberfläche in die Hohlkörper eingedrungene Schlamm bzw. der im eingedrungenen Wasser enthaltene Schlamm beim Weg der Hohlkörper oberhalb der Wasseroberfläche nicht oder nicht vollständig aus den Hohlkörpern herausläuft und beim Eintauchen der Hohlkörper in das Wasser auf der Eintauchseite auch nicht aufgewirbelt wird, so daß sich in den Hohlkörpern Schlamm auf Dauer ablagert. In diesem auf Dauer in den Hohlkörpern abgelagerten Schlamm kann dann eine anaerobe Gährung stattfinden, bei der zwar die Schadstoffe verfaulen, aber nicht verwesen.

Aus der DE-B-1 184 286 ist eine Einrichtung zur Belüftung von Wasser, insbesondere Abwasser, bekannt, die aus einer Belüftungstrommel besteht, die vom zu behandelnden Wasser durchflossen wird und die mit einer Schüttung aus Hohlkörpern in Form von Schöpfgefäßen gefüllt ist. Bei einer solchen Vorrichtung wird durch die Schöpfgefäße praktisch kein Wasser unter die Oberfläche des durch die Trommel strömenden Wassers gedrückt. Die Belüftung des Wassers erfolgt praktisch alleine während des Herabrieselns des Wassers durch die Schüttung in das unten durch die Belüftungstrommel fließende Wasser. Im Wasser vorhandener Schlamm kann sich bei einer solchen Vorrichtung sehr leicht in den als Schöpfgefäße ausgebildeten Hohlkörpern ablagern.

In der DE-A-26 15 465 sind ein Verfahren und eine Einrichtung zur Belüftung von tierischen Ausscheidungen beschrieben. Bei der Vorrichtung nach dieser Patentschrift sind umlaufende rinnenförmige Schöpfgefäße vorgesehen, die paarweise Rücken an Rücken liegen, also paarweise auf einander zugekehrten Seiten offen sind. Die eine Rinne eines jeden Paares ist auf der Auftauchseite nach oben offen, auf der Eintauchseite also nach unten. Beim Auftauchen nimmt diese Rinne Abwasser mit über die Wasseroberfläche, welches beim Weg der Rinne oberhalb der Wasseroberfläche langsam herausrieselt und dabei belüftet wird. Spätestens dann, wenn diese Rinne senkrecht oberhalb der Wasseroberfläche steht, ist sie vollständig entleert. Auf der Eintauchseite nimmt diese Rinne Luft mit unter die Wasseroberfläche, die beim Weg der Rinne unterhalb der Wasseroberfläche langsam um die der Achse zugekehrten Kante der Rinne herausrieselt und bläschenförmig im Wasser aufsteigt. Spätestens dann, wenn die Rinne senkrecht unter der Achse steht, ist die letzte Luft entwichen. Bei dieser Gestaltung muß der Antrieb der Trommel 4 den Auftrieb der Luft in den Rinnen auf der Eintauchseite überwinden und weiter noch, auf der Auftauchseite das Gewicht des in den Rinnen befindlichen Wassers mit heben. Der Antrieb muß entsprechend dimensioniert sein.

Aus der DE-A-26 38 665 ist eine Vorrichtung zur Umsetzung von in Abwässern und Abwässerschlämmen enthaltenen Fremdstoffen bekannt, bei der in einem Umsetzungsbecken bzw. Schlammbelüftungsbecken umlaufende, auf der einen Seite ganz aus dem Wasser auftauchende und auf der anderen Seite ganz in das Wasser eintauchende Hohlkörper angeordnet sind, deren Wandung eine Vielzahl von Durchbrechungen aufweist, wobei diese Durchbrechungen nur in dem auf der Auftauchseite oben liegenden Teil der Wandung vorhanden sind. Bei einer solchen Gestaltung ist die Gefahr, daß sich in den Hohlkörpern Schlamm ablagert, sehr groß.

Aufgabe vorliegender Erfindung ist es, eine Vorrichtung der eingangs genannten Art so zu gestalten, daß in den Hohlkörpern sich praktisch kein Schlamm ablagern kann und weiter noch derart, daß die erforderliche Kraft zum Antrieb möglichst gering ist.

Diese Aufgabe wird im wesentlichen dadurch gelöst, daß die Hohlkörper seitlich geschlossen, oben und unten offen und durch eine etwa parallel der oberen und unteren Öffnung angeordnete, geschlossene Trennwand geteilt sind und an einem mit seiner Umlaufachse parallel zur Wasser- bzw. Schlammoberfläche im Umsetzungs- bzw. Schlammbelüftungsbecken stationär angeordneten Drehkranz befestigt sind, wobei die durch die obere und untere Öffnung verlaufende Achse der Hohlkörper bei der äußersten seitlichen Stellung des Hohlkörpers etwa senkrecht steht und bei waagerechter Lage der durch die obere und untere Öffnung laufenden Achse und unterer Stellung der Hohlkörper das auf der Auftauchseite oben liegende Ende der der Umlaufachse zugekehrten Wandung bis unter die gleiche Wandung des in Umlaufrichtung vorlaufenden Hohlkörpers reicht.

Dabei sind die umlaufenden Hohlkörper derart angeordnet, daß auf der Auftauchseite die obere Öffnung nach oben und die untere Öffnung nach unten zeigt und auf der Eintauchseite umgekehrt.

Der auf der Auftauchseite aus dem Wasser bzw. Schlamm auftauchende Hohlkörper nimmt hier mit seinem Raum oberhalb der Trennwand Wasser bzw. Schlamm mit über die Wasseroberfläche, der langsam über die der Umlaufachse zugekehrte obere Kante des Hohlkörpers in die Wasseroberfläche zurückrieselt. Auf der Eintauchseite nimmt der Hohlkörper mit seinem oberen, hier jetzt unten liegenden Raum, Luft mit unter die Wasseroberfläche. Diese Luft rieselt beim Wege des Hohlkörpers unterhalb der Wasseroberfläche langsam und die der Umlaufachse zugekehrte vordere Kante des Hohlkörpers und steigt in feinen Blasen im Wasser auf bzw. in dem vorlaufenden Hohlkörper. Schlamm lagert sich, zumindest auf Dauer, nicht in solchen Hohlkörpern ab, weil das Ablaufen von Schlamm beim Weg der Hohlkörper oberhalb der Wasseroberfläche nicht durch eine, wenn auch durchbrochene Wandung behindert wird und beim Weg der Hohlkörper unterhalb der Wasseroberfläche an den Wandungen des Hohlkörpers haftender Schlamm von diesen abgewaschen wird.

Zweckmäßig ist es dabei, in den Hohlkörpern eine große luft- und wasserzugängliche Oberfläche besitzende Körper anzuordnen. Sowohl der Hohlkörper selbst als auch die eine große luft- und wasserzugängliche Oberfläche besitzenden Körper sollen aus gegen Abwasser und Abwasserschlamm widerstandfähigen Materialien, insbesondere Kunststoffen, bestehen. Auch ist es von Vorteil, daß die eine große luft- und wasserzugängliche Oberfläche besitzenden festen Körper unbeweglich gegeneinander und gegen die Wandung des Hohlkörpers in diesem angeordnet sind.

Um zu vermeiden, daß beim Umlauf die in den Hohlkörpern angeordneten Körper aus den Hohlkörpern herausfallen, ist es möglich, die obere und untere Öffnung der Hohlkörper mit einer durchbrochenen · Platte, insbesondere einem möglichst grobmaschigen Sieb zu versehen.

Weitere Merkmale der Erfindung sind in der Beschreibung der Figuren und in den Unteransprüchen dargestellt.

In den Figuren 1 bis 3 ist die Erfindung an einer Ausführungsform beispielsweise dargestellt, ohne auf diese Ausführungsform beschränkt zu sein.

Fig. 1    zeigt eine Aufsicht auf eine erfindungsgemäße Vorrichtung,

Fig. 2    einen senkrechten Schnitt nach der Linie A-A in Fig. 1 und

Fig. 3    einen waagerechten Schnitt durch einen Hohlkörper nach der Linie B-B in Fig. 2. .

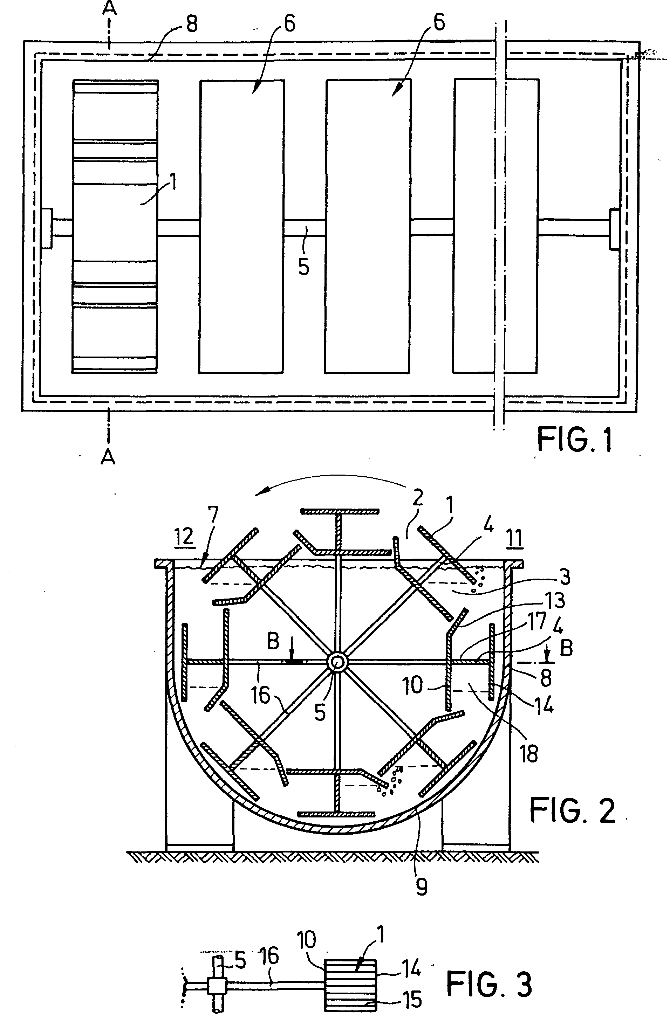

Im Umsetzungs- bzw. Schlammbelüftungsbecken 8 sind um die Umlaufachse 5 drehbar mehrere Drehkränze 6 hintereinander angeordnet. Der Wasser bzw. Schlammzulauf befindet sich an einem Ende, und der Wasser- bzw. Schlammablauf befindet sich am anderen Ende des Umsetzungsbeckens 8. Beide sind als nicht zur Erfindung gehörig nicht dargestellt. Die Fließrichtung des Abwassers bzw. des Schlammes soll parallel der Umlaufachse 5 sein. Die Umlaufachse 5 liegt unterhalb der Wasser-bzw. Schlammoberfläche 7 und parallel dieser. Dabei soll die Umlaufachse 5 zweckmäßig derart angeordnet sein, daß nicht mehr als etwa ein Drittel des Weges der umlaufenden Hohlkörper 1 oberhalb der Wasseroberfläche 7 liegt. Die Drehkränze 6, die in einfachster Ausführung aus einzelnen an der Umlaufachse 5 radial befestigten Speichen 16 bestehen, tragen an ihrem Umfang die Hohlkörper 1. Der Boden 9 des Umsetzungs- bzw. Schlammbelüftungsbeckens 8 ist zweckmäßig im Querschnitt senkrecht zur Umlaufachse halbkreisförmig ausgebildet, und die Drehkränze 6 mit den Hohlkörpern 1 sind vorzugsweise derart angeordnet, daß die Hohlkörper 1 unterhalb der Wasser- bzw. Schlammoberfläche 7 in möglichst unmittelbarer Nähe des Bodens 9 umlaufen. Auf der Auftauchseite 11 tauchen die Hohlkörper 1 aus dem Wasser bzw. Schlamm auf und auf der Eintauchseite 12 wieder in das Wasser oder den Schlamm ein. Die Umlaufrichtung ist in Fig. 2 mit einem Pfeil dargestellt. Angetrieben wird die Umlaufachse 5 in an sich bekannter, als nicht zur Erfindung gehörig nicht dargestellter Weise. Die Hohlkörper 1 können eine beliebige Form aufweisen, z.B. eine zylindrische. Zweckmäßig ist eine im Querschnitt quadratische oder rechteckige. Die Hohlkörper 1 sind derart gestaltet und angeordnet, daß sie bei ihrer äußersten seitlichen Stellung, also dann, wenn sie mit der Umlaufachse 5 in einer Ebene liegen, oben und unten offen, an den Seiten jedoch geschlossen sind. Durch die Trennwand 4, die zweckmäßig etwa senkrecht zu einer durch die obere Öffnung 2 und die untere Öffnung 3 geführten Achse liegt, ist der Hohlkörper 1 in einen oberen Raum 17 und einen unteren Raum 18 geteilt. Die Trennwand 4 ist geschlossen. Das obere Ende 13 der der Umlaufachse 5 zugekehrten Wandung 10 der Hohlkörper 1 ist in Richtung auf die der Umlaufachse 5 abgekehrten Wandung 14 leicht gebogen. Dabei sind die umlaufenden Hohlkörper 1 an den Speichen 16 der Drehkränze 6 derart befestigt, daß die der Umlaufachse 5 zugekehrte Wandung 10 bei unterer Stellung eines Hohlkörpers 1 bis unter die der umlaufenden Achse 5 zugekehrte Wandung 10 des vorlaufenden Hohlkörpers 1 ragt. In den Hohlkörpern 1 sind zweckmäßig eine große luft- und wasserzugängliche Oberfläche besitzende Körper 15 angeordnet. Im dargestellten Ausführungsbeispiel handelt es sich dabei um scheibenförmige Körper 15, die in den beiden Räumen 17 und 18 der Hohlkörper 1 senkrecht zur Umlaufachse 5 und in Abstand von einander angeordnet sind. Diese Anordnung erfolgt dabei in an sich bekannter, als nicht zur Erfindung gehörig nicht dargestellter Weise. Die auf der Auftauchseite 11 aus der Oberfläche 7 des Wassers oder des Schlammes auftauchenden Hohlkörper 1 nehmen im oberen Raum 17 Wasser bzw. Schlamm mit über die Wasseroberfläche. Das Wasser bzw. der Schlamm laufen beim Weg der Hohlkörper oberhalb der Wasseroberfläche über die freie Kante des oberen Endes 13 der Wandung 10 weitgehendst in die Wasseroberfläche zurück. Auf der Eintauchseite 12 liegt der obere Raum 17 der Hohlkörper 1 unten. Beim Eintauchen in die Wasser- bzw. Schlammoberfläche 7 wird im Raum 17 von den Hohlkörpern 1 Luft mit unter die Oberfläche 7 genommen. Bei der dargestellten Anordnung der Umlaufachse 5 sind die Räume 17 der Hohlkörper 1 nach dem Eintauchen in die Oberfläche 7 etwa zur Hälfte mit Luft gefüllt. Diese Luft entweicht in feinen Perlen langsam aus den Räumen 17, sobald die freie Kante des abgewinkelten Endes 13 der Wandung 10 und die Wasseroberfläche im Raum 17 in einer Ebene liegen. Sobald der vorlaufende Hohlkörper 1 sich auf dem aufsteigenden Teil der Umlaufbahn befindet, die Wandung 10 dieses vorlaufenden Hohlkörpers also vom nachlaufenden Hohlkörper weg schräg nach oben ansteigt, bleibt ein Teil der aus dem Raum 17 des nachlaufenden Hohlkörpers 1 perlenden Luft im Raum 18 des vorlaufenden Hohlkörpers 1 und drückt aus diesem das Wasser teilweise heraus. Der Auftrieb der auf der Umlaufbahn aufsteigenden Hohlkörper 1 wird dadurch begünstigt. Diese Art der Gestaltung der Hohlkörper 1 hat des weiteren noch den erheblichen Vorteil, daß in den absteigenden Hohlkörpern 1 im Raum 17 und in den aufsteigenden Hohlkörpern 1 im Raum 18 die Grenzfläche Wasser/Luft sich bezüglich der eine große luft- und wasserzugängliche Oberfläche besitzenden Körper 15 ständig verschiebt, so daß immer neue Partien des biologischen Rasens, der sich auf diesen Körpern und an den Innenwandungen der Hohlkörper 1 bildet, mit der Grenzfläche Luft/Wasser in Berührung kommen, was die Wirksamkeit des biologischen Rasens erhöht. Die Wirksamkeit des biologischen Rasens wird weiter noch dadurch erhöht, daß in den absteigenden Hohlkörpern in den Räumen 17 und in den aufsteigenden Hohlkörpern in den Räumen 18 durch die auf diesen Räumen lastende Wassersäule die Luft unter einem, wenn auch relativ geringem, Überdruck steht. Dabei ist es möglich, die Hohlkörper 1 verstellbar an den Drehkränzen zu befestigen.

**Ansprüche**

1. Vorrichtung zur Umsetzung von in Abwässern und Abwässerschlämmen enthaltenen Fremdstoffen, insbesondere Schadstoffen, vor allem Fäkalien, in unschädliche Stoffe, mit mehreren in einem Umsetzungsbecken bzw. Schlammbelüftungsbecken angeordneten, umlaufenden, auf der einen Seite des Umsetzungsbeckens bzw. des Schlammbelüftungsbeckens ganz aus dem Wasser bzw. dem Schlamm auftauchenden und auf der anderen Seite ganz eintauchenden Hohlkörpern, deren auf der Auftauchseite obenliegendes Teil auf der Eintauchseite unten liegt und umgekehrt, dadurch gekennzeichnet, daß die Hohlkörper (1) seitlich geschlossen, oben und unten offen und durch eine etwa parallel der oberen und unteren Öffnung (2, 3) angeordnete, geschlossene Trennwand (4) geteilt sind und an einem mit seiner Umlaufachse (5) parallel zur Wasser- bzw. Schlammoberfläche (7) im Umsetzungs- bzw. Schlammbelüftungsbecken (8) stationär angeordneten Drehkranz (6) befestigt sind, wobei die durch die obere und untere Öffnung (2, 3) verlaufende Achse der Hohlkörper (1) bei der äußersten seitlichen Stellung des Hohlkörpers (1) etwa senkrecht steht und bei waagerechter Lage der durch die obere und untere Öffnung (2, 3) laufenden Achse und unterer Stellung der Hohlkörper (1) das auf der Auftauchseite (11) obenliegende Ende (13) der der Umlaufachse (5) zugekehrten Wandung (10) bis unter die gleiche Wandung (10) des in Umlaufrichtung vorlaufenden Hohlkörpers (1) reicht.

2. Vorrichtung nach Anspruch 1, dadurch gekennzeichnet, daß die Hohlkörper (1) am Umfang des Drehkranzes (6) befestigt sind.

3. Vorrichtung nach einem oder mehreren der Ansprüche 1 bis 2, dadurch gekennzeichnet, daß die Hohlkörper (1) verstellbar am Drehkranz (6) befestigt sind.

4. Vorrichtung nach einem oder mehreren der Ansprüche 1 bis 3, dadurch gekennzeichnet, daß mehrere Drehkränze (6) im Umsetzungs- bzw. Schlammbelüftungsbecken (8) angeordnet sind.

5. Vorrichtung nach Anspruch 4, dadurch gekennzeichnet, daß mehrere Drehkränze (6) hintereinander, zweckmäßig mit einer gemeinsamen Umlaufachse (5) im Umsetzungs- bzw. Schlammbelüftungsbecken (8) angeordnet sind.

6. Vorrichtung nach einem oder mehreren der Ansprüche 1 bis 5, dadurch gekennzeichnet, daß der Boden (9) des Umsetzungs- bzw. Schlammbelüftungsbeckens (8) im Querschnitt senkrecht zur Umlaufachse halbkreisförmig ausgebildet ist.

7. Vorrichtung nach Anspruch 6, dadurch gekennzeichnet, daß die Hohlkörper (1) in unmittelbarer Nähe des Bodens (9) umlaufen.

8. Vorrichtung nach einem oder mehreren der Ansprüche 1 bis 7, dadurch gekennzeichnet, daß das auf der Auftauchseite (11) obenliegende Ende (13) der der Umlaufachse (5) zugekehrten Wandung (10) der Hohlkörper (1) in Richtung auf die der Umlaufachse (6) abgekehrten Wandung (14) gebogen ist.

9. Vorrichtung nach einem oder mehreren der Ansprüche 1 bis 8, dadurch gekennzeichnet, daß die Umlaufachse (5) parallel der Fließrichtung des Wassers bzw. des Schlammes liegt.

10. Vorrichtung nach einem oder mehreren der Ansprüche 1 bis 9, dadurch gekennzeichnet, daß in den Hohlkörpern (1) eine große luft- und wasserzugängliche Oberfläche besitzende Körper (15) angeordnet sind.

11. Vorrichtung nach Anspruch 10, dadurch gekennzeichnet, daß die obere und die untere Öffnung (2, 3) des Hohlkörpers (1) mit einer durchbrochenen Platte, insbesondere einem möglichst grobmaschigen Sieb versehen sind.

12. Vorrichtung nach einem oder mehreren der Ansprüche 1 bis 11, dadurch gekennzeichnet, daß die Hohlkörper (1) und die in diesen angeordneten, eine große luft- und wasserzugängliche Oberfläche besitzenden Körper (15) aus gegen Abwasser und Abwasserschlamm widerstandsfähigen Materialien, insbesondere Kunststoff, bestehen.

13. Vorrichtung nach einem oder mehreren der Ansprüche 1 bis 12, dadurch gekennzeichnet, daß die eine große luft- und wasserzugängliche Oberfläche besitzenden, festen Körper (15) unbeweglich gegeneinander und gegen die Wandung (10, 14) des Hohlkörpers (1) in diesem angeordnet sind.

14. Vorrichtung nach einem oder mehreren der Ansprüche 1 bis 13, dadurch gekennzeichnet, daß die eine große luft- und wasserzugängliche Oberfläche besitzenden festen Körper (15) scheibenförmig gestaltet und im Abstand voneinander angeordnet sind.

15. Vorrichtung nach Anspruch 14, dadurch gekennzeichnet, daß die scheibenförmig gestalteten Körper (15) senkrecht zur Umlaufachse (5) angeordnet sind.

**Claims**

1. Apparatus for the conversion into harmless substances of pollutants which are contained in effluents and effluent sludges, more particularly harmful substances and above all faeces, comprising a plurality of rotating hollow bodies which are situated in a conversion tank or sludge aeration tank and emerge entirely from the water or sludge at one side of the conversion tank or sludge aeration tank and are immersed entirely at the other side, and whose portion situated on top at the emerging side is at the bottom at the immersing side, and vice versa, characterised in that the hollow bodies (1) are laterally closed and are open top and bottom, and are divided by a closed partition wall (4) which is situated substantially parallel to the upper and lower apertures (2, 3), and are secured on a rotor (6) arranged with its rotary shaft (5) in a stationary situation parallel to the water or sludge surface (7) in the conversion or sludge aeration tank (8), and in the outermost lateral position of the hollow body (1) in each case the axis of each of the hollow bodies which extends through the upper and lower apertures (2, 3) is situated substantially vertically, and when the axis extending through the upper and lower apertures (2, 3) is in a horizontal position and the hollow body (1) concerned is in the lower position, that end (13) of the wall (10) nearest the rotary shaft (5) which is situated on top at the emerging side (11) extends to below the same wall (10) of the hollow body (1) which precedes in the rotation direction.

2. Apparatus according to Claim 1, characterised in that the hollow bodies (1) are secured on the periphery of the rotor (6).

3. Apparatus according to one or more of Claims 1 and 2, characterised in that the hollow bodies (1) are secured adjustably on the rotor (6).

4. Apparatus according to one or more of Claims 1 to 3, characterised in that a plurality of rotors (6) are arranged in the conversion or sludge aeration tank (8).

5. Apparatus according to Claim 4, characterised in that a plurality of rotors (6) are arranged one behind the other, advantageously with a common rotary shaft (5), in the conversion or sludge aeration tank (8).

6. Apparatus according to one or more of Claims 1 to 5, characterised in that the bottom (9) of the conversion or sludge aeration tank (8) is semi-circular in form in cross-section taken at right angles to the rotary shaft.

7. Apparatus according to Claim 6, characterised in that the hollow bodies (1) rotate in the immediate vicinity of the bottom (9).

8. Apparatus according to one or more of Claims 1 to 7, characterised in that the end (13) situated on top at the emerging side (11) of that wall (10) of the hollow bodies (1) which faces towards the rotary shaft (5) is bent towards the wall (14) which is remote from the rotary shaft (5).

9. Apparatus according to one or more of Claims 1 to 8, characterised in that the rotary shaft (5) is situated parallel to the direction of flow of the water or sludge.

10. Apparatus according to one or more of Claims 1 to 9, characterised in that bodies (15) having a large surface area accessible to air and water are arranged in the hollow bodies (1).

11. Apparatus according to Claim 10, characterised in that the upper and lower apertures (2, 3) of the hollow bodies (1) are provided with a perforated plate, more particularly as coarse-mesh a screen as possible.

12. Apparatus according to one or more of Claims 1 to 11, characterised in that the hollow bodies (1) and the bodies (15) which are arranged therein and which have a large air-accessible and water-accessible surface area are made of materials resistant to waste water and waste water sludge, more particularly plastics.

13. Apparatus according to one or more of Claims 1 to 12, characterised in that the solid bodies (15) having a large surface area accessible to air and water are arranged to be immobile relatively to one another and relatively to the wall (10, 14) of the hollow bodies (1), in the said hollow bodies.

14. Apparatus according to one or more of Claims 1 to 13, characterised in that the solid bodies (15) having a large surface accessible to air and water are disc-shaped and are arranged spaced apart from one another.

15. Apparatus according to Claim 14, characterised in that the disc-shaped bodies (15) are arranged at right angles to the rotary shaft (5).

**Revendications**

1. Dispositif pour la conversion de matières étrangères contenues dans des eaux usées et dans des boues d'eau d'évacuation, notamment des matières nocives et surtout des matières fécales, en matières non nocives, avec plusieurs corps creux tournants, disposés dans un bac de transformation et d'aération de boues, émergeant totalement de l'eau et de la boue sur l'un des côtés du bac de transformation, et plongeant totalement sur l'autre côté du bac, de telle sorte que la partie du corps qui se trouve en haut sur le côté émergence se trouve par contre en bas sur le côté immersion et inversement, dispositif caractérisé en ce que les corps creux (1), fermés latéralement, et ouverts en haut et en bas, sont partagés chacun par une cloison séparatrice fermée (4), disposée parallèlement à l'ouverture supérieure (2) et à l'ouverture inférieure (3) du corps creux, et sont fixés à une couronne rotative (6) dont l'axe de révolution (5) reste parallèle à la surface (7) de l'eau et des boues dans le bac de transformation (8), de telle sorte que l'axe du corps creux passant à travers l'ouverture supérieure (2) et l'ouverture inférieure (3) se trouve, lors de la position latérale extérieure extrême du corps creux, en position verticale, tandis que, lors d'une position horizontale de cet axe et une position inférieure du corps creux (1), l'extrémité de la paroi (10) tournée vers l'axe de révolution (5) et située en haut sur le côté émersion, s'étend jusqu'au-dessous de la même paroi (10) du corps creux (1) qui précède celui-ci en direction de la révolution.

2. Dispositif suivant la revendication 1, caractérisé en ce que les corps creux (1) sont fixés sur le pourtour d'une couronne (6) entraînée en rotation.

3. Dispositif suivant l'une des revendications 1 ou 2, caractérisé en ce que les corps creux (1) sont fixés à la couronne (6) de manière réglable en position.

4. Dispositif suivant l'une quelconque des revendications 1 à 3, caractérisé en ce que plusieurs couronnes rotatives (6) sont disposées dans le bac de transformation et de ventilation des boues (8).

5. Dispositif suivant la revendication 4, caractérisé en ce que plusieurs couronnes rotatives (6) sont disposées dans le bac de transformation et ventilation de boues (8), montées l'une derrière l'autre, notamment avec un axe de révolution commun (5).

6. Dispositif suivant l'une quelconque des revendications 1 à 5, caractérisé en ce que le fond (9) du bac de transformation et ventilation (8) a la forme d'un demi-cercle dont le plan est perpendiculaire à l'axe de révolution.

7. Dispositif suivant la revendication 6, caractérisé en ce que les corps creux (1) se déplacent, dans leur révolution à proximité directe du fond (9) du bac.

8. Dispositif suivant l'une quelconque des revendications 1 à 7, caractérisé en ce que l'extrémité (13) se trouvant vers le haut du côté émersion (11), de la paroi (10) du corps creux (1) tournée vers l'axe de révolution (5) est recourbée ou coudée en direction de la paroi (14) la plus éloignée de l'axe de révolution (5).

9. Dispositif suivant l'une quelconque des revendications 1 à 8, caractérisé en ce que l'axe de révolution (5) est parallèle à la direction d'écoulement de l'eau et de la boue.

10. Dispositif suivant l'une quelconque des revendications 1 à 9, caractérisé en ce que, dans chacun des corps creux (1) est disposé un corps (15) présentant une grande surface extérieure accessible à l'air et à l'eau.

11. Dispositif suivant la revendication 10, caractérisé en ce que l'ouverture supérieure (2) et l'ouverture inférieure (3) du corps creux (1) sont pourvues d'une plaque perforée, notamment un tamis à mailles aussi grandes que possible.

12. Dispositif suivant l'une quelconque des revendications 1 à 11, caractérisé en ce que les corps creux (1) et les corps qu'ils contiennent présentant une grande surface extérieure accessible à l'air et à l'eau (15) sont constitués en une matière résistant à l'agression de l'eau usée et de la boue, notamment une matière synthétique.

13. Dispositif suivant l'une quelconque des revendications 1 à 12, caractérisé en ce que les corps fixes présentant une grande surface supérieure accessible à l'air et à l'eau (15), sont disposés de manière non déplaçable l'un par rapport à l'autre et à la paroi (10, 14) du corps creux (1).

14. Dispositif suivant l'une quelconque des revendications 1 à 13, caractérisé en ce que les corps fixes présentant une grande surface accessible à l'air et à l'eau (15) ont la forme de disques et sont disposés espacés l'un de l'autre.

15. Dispositif suivant la revendication 14, caractérisé en ce que les corps (15) en forme de disques sont disposés dans les plans perpendiculaires à l'axe de révolution (5).

FIG.1

FIG. 2.

FIG. 3